# EUROPÄISCHE PATENTANMELDUNG

(11) **EP 1 052 387 A2**
(43) Veröffentlichungstag der Anmeldung: **15.11.2000**
(21) Anmeldenummer: 00107445.9
(22) Anmeldetag: 06.04.2000
(51) Int. Cl.: F02D 21/08, F02M 25/07

(54) **Verfahren zum Betreiben einer Abgasrückführeinrichtung einer Brennkraftmaschine**

(30) Priorität: 08.05.1999 DE 19921494
(71) Anmelder: DEUTZ Aktiengesellschaft, 51063 Köln (DE)
(72) Erfinder: Hülsmann, Bernd, 40764 Langenfeld (DE); Lutat, Martin, 53757 Sankt Augustin (DE)

(57) **Zusammenfassung**

Die Erfindung betrifft eine Abgasrückführeinrichtung einer Brennkraftmaschine, bei der Abgas von einer Auslaßleitung der Brennkraftmaschine über ein Abgasrückführventil zu einer Einlaßleitung der Brennkraftmaschine gelangt, wobei das Abgasrückführventil in Abhängigkeit von erfaßten Betriebsparametern der Brennkraftmaschine angesteuert wird.

Gegenüber diesem Stand der Technik ist die erfindungsgemäße Abgasrückführeinrichtung dadurch verbessert, daß ein in Abhängigkeit der erfaßten Betriebsparameter (Arbeitspunkt) der Brennkraftmaschine ermittelter Ist-Wert für die Abgasrückführrate bei Abweichung von einem für diesen Arbeitspunkt geltenden Soll-Wert auf den Soll-Wert eingeregelt wird. Damit sind Toleranzen, Verschleiß und Verschmutzung von Bauteilen der Abgasrückführeinrichtung, insbesondere des Abgasrückführventiles, ausgleichbar.

## Beschreibung

Die Erfindung betrifft ein Verfahren zum Betreiben einer Abgasrückführeinrichtung einer Brennkraftmaschine sowie eine Abgasrückführeinrichtung und eine Anwendung gemäß den Merkmalen der entsprechenden Patentansprüche.

Aus der DE 42 24 219 A1 ist ein Verfahren zum Betreiben einer Abgasrückführeinrichtung einer Brennkraftmaschine bekannt, bei der Abgas von einer Auslaßleitung der Brennkraftmaschine über ein Abgasrückführventil zu einer Einlaßleitung der Brennkraftmaschine gelangt. Einer elektronischen Steuereinrichtung werden Betriebsparameter der Brennkraftmaschine wie Signale eines Drucksensors, eines Drosselsensors, eines Kurbelwinkelsensors und eines Kühlwassertemperatursensors zugeführt, wobei in Abhängigkeit zumindest einiger dieser erfaßten Betriebsparameter das Abgasrückführventil angesteuert wird. Mit einer Fehlerdiagnosevorrichtung wird ermittelt, ob in dem Abgasrückführsystem ein Fehler vorliegt oder nicht. Besondere Maßnahmen zum Ansteuern des Abgasrückführventiles zur Einstellung bestimmter Abgasrückführraten sind nicht angegeben.

Der Erfindung liegt die Aufgabe zugrunde, ein Verfahren zum Betreiben einer Abgasrückführeinrichtung und eine entsprechend ausgestaltete Abgasrückführeinrichtung für eine Brennkraftmaschine bereitzustellen, die gegenüber dem Stand der Technik verbessert ist und eine genauere Einstellung der Abgasrückführrate ermöglicht. Darüber hinaus soll eine vorteilhafte Anwendung angegeben werden.

Diese Aufgabe wird dadurch gelöst, daß ein in Abhängigkeit der erfaßten Betriebsparameter (Arbeitspunkt) der Brennkraftmaschine ermittelter Ist-Wert für die Abgasrückführrate bei Abweichung von einem für diesen Arbeitspunkt geltenden Soll-Wert auf den Soll-Wert eingeregelt wird. Durch diesen Vergleich von ermitteltem Ist-Wert und einzustellendem Soll-Wert für die Abgasrückführrate kann genau jene Abgasrückführrate eingestellt werden, um den optimalen Betrieb der Brennkraftmaschine, insbesondere hinsichtlich der Abgaszusammensetzung, zu ermöglichen. Ein weiterer Vorteil liegt darin, daß Veränderungen im System der Abgasrückführeinrichtung berücksichtigt und ausgeglichen werden können. Solche Veränderungen sind zum einen Toleranzen der insbesondere in Serienproduktion hergestellten Abgasrückführeinrichtungen mit ebenfalls in Serienproduktion hergestellten Abgasrückführventilen, deren Bauelemente für sich betrachtet Toleranzen unterliegen können. Dabei ist es denkbar, daß sich mehrere einzelne Toleranzen ungünstig addieren, so daß bei einfacher Ansteuerung des Abgasrückführventiles eines solche Abgasrückführrate eingestellt wird, die für den Betrieb der Brennkraftmaschine ungünstig oder im schlimmsten Fall sogar schädlich ist. Als weitere Veränderungen im System der Abgasrückführeinrichtung sind Verschleiß und mit zunehmender Betriebsdauer der Brennkraftmaschine auch Verschmutzungen in der Abgasrückführeinrichtung zu nennen, die in vorteilhafter Weise mit der erfindungsgemäß vorgeschlagenen Regelung ausgeglichen werden können.

Darüber hinaus sind auch beliebige Zwischenpositionen für den Ventilhub des Abgasrückführventiles einstellbar, ohne daß eine Lagerückmeldung für diesen Ventilhub des Abgasrückführventiles erforderlich ist. Damit entfällt in vorteilhafter Weise ein entsprechender Sensor für den Ventilhub, so daß eine einfache Bauweise des Abgasrückführventiles möglich ist.

Durch die Vorgabe von Soll-Werten für einzelne Arbeitspunkte ist es auch einfach möglich, für verschiedene Typen von Brennkraftmaschinen mit ein und demselben Abgasrückführventil die gewünschten Abgasrückführraten einstellen zu können. Umgekehrt kann durch entsprechende Soll-Wertvorgabe auch für ein und denselben Brennkraftmaschinentyp mit verschiedenen Abgasrückführventilen gearbeitet werden.

Zusammenfassend ist also festzustellen, daß aufgrund des erfindungsgemäßen Soll-Ist-Wert-Vergleiches eine Anpassung an die tatsächlich vorliegenden Verhältnisse, insbesondere über die gesamte Lebensdauer der Brennkraftmaschine vornehmen zu können, so daß auch eine Kontrolle der tatsächlich zurückgeführten Abgasmasse gegeben ist.

Toleranzen und Verschleiß sowie Verschmutzung, die die Abgasrückführrate ungünstig beeinflussen, können auf einfachste Art ausgeglichen werden.

In Weiterbildungen der Erfindung wird bei der Ermittlung des Ist-Wertes für die Abgasrückführrate die gemessene Ansaugluftmasse in der Einlaßleitung und/oder das im Abgas gemessene Verbrennungsluftverhältnis, insbesondere der mittels eines Sauerstoffsensors im Abgas gemessene Sauerstoffanteil, berücksichtigt. Werden sowohl die Ansaugluftmasse als auch das Verbrennungsluftverhältnis ermittelt, ist damit in vorteilhafter Weise eine redundante Meßwerterfassung realisiert, so daß die Betriebssicherheit erhöht wird.

Wird nur die gemessene Ansaugluftmasse in der Einlaßleitung oder nur das im Abgas in der Auslaßleitung gemessene Verbrennungsluftverhältnis, die beide aus einer Veränderung des Ventilhubes des Abgasrückführventiles veränderbar sind, herangezogen, liegen damit Parameter zur Regelung der Abgasrückführrate vor, die sich schnell ändern und somit zu einer schnellen Einregelung auf den geforderten Soll-Wert zur Verfügung stehen. Außerdem ist von Vorteil, daß bei Brennkraftmaschinen in der Regel ein Luftmassensensor zur Regelung des Betriebes der Brennkraftmaschine zur Verfügung steht, so daß dieser für die weitere Funktion der Abgasrückführung verwendet werden kann. Damit entfallen weitere Bauteile und entsprechende Montageschritte.

In Weiterbildung der Erfindung wird zumindest eine Kennlinie wenigstens eines die Abgasrückführrate beeinflussenden Betriebsparameters, insbesondere die gemessene Ansaugluftmasse beziehungsweise das im Abgas gemessene Verbrennungsluftverhältnis, über einen vorgebbaren Bereich erfaßt und mit einer Soll-Kennlinie verglichen, wobei zumindest eine Annäherung (Abgleich) der Soll-Kennlinie an die erfaßte Kennlinie durchgeführt wird. Durch die Erfassung einer Kennlinie eines die Abgasrückführrate beeinflussenden Betriebsparameters und den nachfolgenden Abgleich können alle Einflüsse wie Toleranzen, Verschleiß und Verschmutzung und gegebenenfalls weitere Einflüsse ausgeglichen werden. Dies ist insbesondere dann von Vorteil, wenn die Abgasrückführrate (AGR-Rate) in einem Bereich zwischen 0 und 25% liegt, da bei diesen recht geringen Abgasrückführraten sich alleine schon die Toleranzen von Sensoren (zum Beispiel im Bereich von ± 5% des Meßwertes) negativ bemerkbar machen. Durch den erfindungsgemäß vorgeschlagenen Abgleich ist es nun möglich, die Abgasrückführung auch bei geringeren Abgasrückführraten (insbesondere bis ungefähr 25%) durchzuführen.

So wird zum Beispiel eine in einem elektronischen Steuergerät abgelegte Kennlinie (oder auch mehrere Kennlinien, die Bestandteil eines zwei- oder drei-dimensionales Kennfeldes sind) für den Soll-Wert des Luftmassenstromes beziehungsweise für den Soll-Wert des Verbrennungsluftverhältnisses in einem oder mehreren Kennfeldpunkten mit dem aktuell gemessenen, zugehörigen Ist-Wert für den Luftmassenstrom beziehungsweise das Verbrennungsluftverhältnis verglichen. Wenn Abweichungen zwischen dem gemessenen Ist-Wert und dem Soll-Wert in dem Kennfeld beziehungsweise in der Kennlinie bestehen, wird das Kennfeld beziehungsweise die Kennlinie für den Soll-Wert, gegebenenfalls unter Anwendung einer Plausibilitätskontrolle, auf den Wert des gemessenen Ist-Wertes korrigiert (ersetzt) oder angenähert, so daß diese Abweichung möglichst klein oder zu Null gemacht wird. Dies erfolgt in vorteilhafter Weise gemäß einer weiteren Ausgestaltung der Erfindung bei geschlossenem Abgasrückführventil, wozu dieses von dem elektronischen Steuergerät ein entsprechendes Ansteuersignal erhält.

In Weiterbildung der Erfindung wird der Abgleich für einzelne Kennlinienpunkte und/oder zumindest für Teilbereiche der Kennlinie, insbesondere jedoch der gesamten Kennlinie, durchgeführt. Dabei kann entweder ein Arbeitspunkt nach dem anderen der Brennkraftmaschine angefahren werden und adaptiv im momentan gemessenen Kennfeldpunkt beziehungsweise Kennlinienpunkt der Abgleich durchgeführt werden. Für diesen Fall bietet es sich an, daß zwischen den einzelnen adaptiv korrigierten Kennfeldpunkten oder Kennlinienpunkten liegende Bereiche durch einen entsprechenden Algorithmus (zum Beispiel Interpolation) ebenfalls angepaßt beziehungsweise angeglichen werden. Daneben ist es denkbar, daß zumindest Teilbereiche des Kennfeldes beziehungsweise der Kennlinie abgeglichen werden.

In Weiterbildung der Erfindung wird zur Durchführung des Abgleiches das Abgasrückführventil von dem elektronischen Steuergerät geschlossen und der Abgleich durchgeführt, wenn folgende Bedingungen gegeben sind und gegebenenfalls während des Abgleiches erhalten bleiben:
- stationärer Betrieb der Brennkraftmaschine (insbesondere keine Einspritzmengen- und Drehzahländerung in einem definierten Zeitfenster),
- betriebswarme Brennkraftmaschine.

Wenn diese Randbedingungen vorliegen, befindet sich die Brennkraftmaschine in einem Zustand, in dem der Abgleich optimal möglich ist und keine Bedingungen vorliegen, die den Abgleich verfälschen können (wie zum Beispiel instationärer Motorbetrieb, kalte oder überhitzte Brennkraftmaschine oder sonstiges). Der stationäre Betrieb der Brennkraftmaschine kann zum Beispiel dadurch erkannt werden, daß die Signale an die Einspritzventile oder auch die Ausgangssignale eines Drehzahlsensors konstant bleiben. Eine betriebswarme Brennkraftmaschine kann beispielsweise mittels eines Kühlwassertemperatursensors, eines Öltemperatursensors, eines Ladelufttemperatursensors oder dergleichen festgestellt werden. Weiterhin ist denkbar, den Abgleich nur während eines bestimmten Zeitfensters durchzuführen oder aber, wenn für den gesamten Abgleich der Kennlinie beziehungsweise des Kennfeldes dieses Zeitfenster nicht ausreichend war, das Zeitfenster entsprechend zu verlängern oder zu einem späteren Zeitpunkt einen Restabgleich vorzunehmen.

In Weiterbildung der Erfindung wird der Abgleich einmalig oder mehrmals durchgeführt. Zum Ausgleich von Toleranzen des gesamten Systemes der Abgasrückführeinrichtung ist es denkbar, nach Herstellung der Brennkraftmaschine einmalig einen erfindungsgemäßen Abgleich durchzuführen. Zur Optimierung des Betriebes der Brennkraftmaschine (insbesondere hinsichtlich der Abgaszusammensetzung und der Lebensdauer und des Kraftstoffverbrauches der Brennkraftmaschine) wird der Abgleich sinnvoller Weise mehrmals durchgeführt. Hierbei kommt in Betracht, diesen Abgleich in bestimmten regelmäßigen oder unregelmäßigen Zeitintervallen (zum Beispiel während einer Wartung oder einer Inspektion von in Fahrzeugen eingebauten Brennkraftmaschine) durchzuführen oder auch immer dann durchzuführen, wenn im Rahmen des Betriebes der Brennkraftmaschine die für den Abgleich erforderlichen Randbedingungen (wie schon weiter oben geschildert) vorliegen. Darüber hinaus ist auch selbstverständlich eine Kombination der geschilderten mehrmaligen Durchführungen des Abgleiches denkbar.

Eine besonders vorteilhafte Anwendung des Verfahrens ist eine Anwendung bei einer Dieselbrennkraftmaschine, insbesondere bei einer in einem Fahrzeug eingebauten Dieselbrennkraftmaschine. Bei Pkw-Dieselbrennkraftmaschinen wird mit Abgasrückführraten von bis zu 50 % gearbeitet, so daß die Toleranzen der Meßwerte der Sensoren, in deren Abhängigkeit bisher das Abgasrückführventil angesteuert wurde, von untergeordneter Bedeutung sind. Bei NFZ-Dieselbrennkraftmaschinen hingegen liegen die zu regelnden Abgasrückführraten, insbesondere im Vollastbereich, im Bereich der Meßgenauigkeit der eingesetzten Sensoren, so daß das erfindungsgemäße Verfahren besonders vorteilhaft für die Regelung von Abgasrückführeinrichtungen bei Dieselbrennkraftmaschinen, insbesondere bei solchen, die in Fahrzeugen (Nutzfahrzeugen) eingebaut sind, angewendet werden kann. Der Vorteil erhöht sich insbesondere dann, wenn die Abgasrückführrate maximal 10% im Vollastbereich der Brennkraftmaschine beträgt, da in diesem Bereich höhere Abgasrückführraten nicht anwendbar sind.

Nachfolgend wird die Erfindung anhand eines in den Figuren dargestellten Ausführungsbeispieles, auf das die Erfindung jedoch nicht beschränkt ist, weiter beschrieben und näher erläutert.

Es zeigen:
- Figur 1:: eine schematische Ansicht einer aufgeladenen Brennkraftmaschine mit Abgasrückführeinrichtung,
- Figur 2:: eine Kennlinie für die Soll- und Ist-Abgasrückführrate und
- Figur 3:: verschiedene Soll-Kennlinien des Luftmassenstromes einschließlich des erfindungsgemäßen Abgleiches.

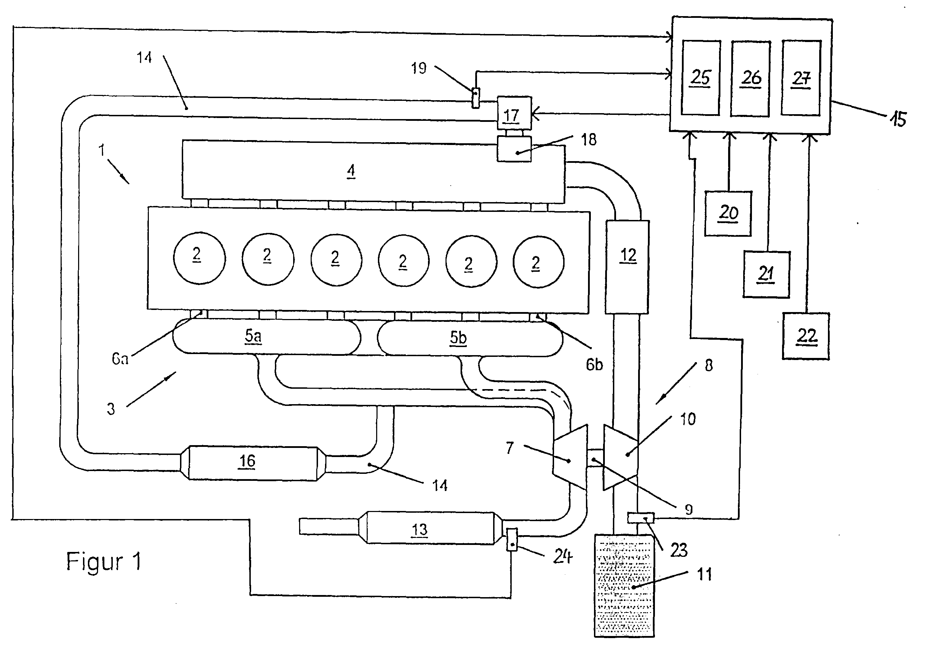

Die selbstzündende Brennkraftmaschine 1 nach Figur 1 weist insgesamt sechs Zylinder 2 auf, wobei an den Zylinderkopf eine Abgassammelleitung 3 (Auslaßleitung) und eine Ladeluftleitung 4 (Einlaßleitung) angeschlossen sind. Die Abgassammelleitung 3 weist zwei Zweige 5a, 5b auf, die mit den Verzweigungen 6a, 6b an die in den Zylinderkopf eingelassenen und jedem Zylinder 2 zugeordneten Auslaßkanäle angeschlossen sind.

Die beiden Zweige 5a, 5b münden über entsprechende Verbindungsleitungen in eine gemeinsame Turbinenkammer 7 eines Abgasturboladers 8.

Grundsätzlich ist es hier auch möglich, zwei Turbinenkammern vorzusehen, die dann auf eine gemeinsame Turbine münden, die über eine Welle 9 das Verdichterrad des Verdichters 10 des Abgasturboladers 8 antreibt. Bei dieser Lösung wird dann gleichzeitig die Abgasrückführleitung 14 an dem Zweig angeschlossen, der in die Turbinenkammer ohne einen sogenannten Waste Gate einmündet. Über den Waste Gate mit einem Steuerventil kann das Abgas unter Umgehung der Turbine in einen Abgasschalldämpfer 13 abströmen, so daß hierdurch in diesem Zweig der Abgasgegendruck herabgesetzt wird. Daher wird zur Erhöhung der möglichen Abgasrückführrate die Abgasrückführleitung 14 an den anderen Zweig ohne Waste Gate angeschlossen.

Der Verdichter 10 saugt die der Brennkraftmaschine 1 zuzuführende Verbrennungsluft über ein Ansaugfilter 11 aus der Umgebung an und führt die verdichtete Luft über einen Ladeluftkühler 12 der Ladeluftleitung 4 zu.

Hinter der Turbinenkammer 7 mündet eine Abgasleitung in den zuvor genannten Abgasschalldämpfer 13, von dem aus das Abgas in die Umgebung oder weitere Reinigungseinrichtungen strömt.

Die Abgasrückführleitung 14 weist zunächst einen Abgasrückkühler 16 und in ihrem weiteren Verlauf, kurz vor dem Eintritt in die Ladeluftleitung 4, ein Abgasrückführsteuerventil 17 und ein Rückschlagventil 18 auf. Ein die Abgastemperatur messender Temperatursensor (Thermoelement 19) ist in dem Ausführungsbeispiel direkt vor dem Abgasrückführsteuerventil 17 in die Abgasrückführleitung 14 eingesetzt, kann aber auch in das Abgasrückführsteuerventil 17, die weitere Verbindung zu dem Rückschlagventil 18 oder das Rückschlagventil 18 selbst integriert sein. Das Abgasrückführsteuerventil 17 wird von einer Steuerelektronik 15 in Abhängigkeit von Motordaten einschließlich den Meßwerten des Thermoelementes 19 gesteuert, während das Rückschlagventil 18 mit seinen Rückschlagklappen zu deren Kühlung in die Ladeluftleitung 4 im Bereich des Eintritts der Ladeluft eingesetzt ist.

Weiterhin ist in Figur 1 gezeigt, daß dem elektronischen Steuergerät von Sensoren 20 bis 22 verschiedene Betriebsparameter der Brennkraftmaschine 1 zugeführt werden. Hierbei handelt es sich um Betriebsparameter wie Druck, Drehzahl und dergleichen, wobei auch mehr oder weniger als drei Sensoren vorhanden sein können.

In der Einlaßleitung, insbesondere dem Verdichter 10 nachgeschaltet ist ein Luftmassensensor 23 angeordnet, dessen Ausgangssignal ebenfalls dem elektronischen Steuergerät 15 zugeführt wird. Alternativ oder ergänzend zu dem Luftmassensensor 23 ist in der Abgasleitung 14 hinter der Turbinenkammer 7 ein Sensor 24 vorhanden, mit dem das Verbrennungsluftverhältnis oder auch der Sauerstoffanteil in dem Abgas ermittelt wird und ein entsprechendes Signal an das elektronische Steuergerät 15 übermittelt wird. In Abhängigkeit der erfaßten Betriebsparameter mittels der Sensoren 20 bis 22 und vor allen Dingen in Abhängigkeit des Luftmassensensors 23 beziehungsweise des Sensors 24 wird ein Ist-Wert für die Abgasrückführrate ermittelt, das heißt, daß die aus einer Veränderung des Ventilhubes des Abgasrückführventiles 17 resultierende Veränderung des mittels des Luftmassensensors 23 gemessenen Ansaugluftmassenstroms zur Bestimmung der Abgasrückführrate herangezogen wird. Gleiches gilt zur Bestimmung der Abgasrückführrate für das Ausgangssignal des Sensors 24. Die Abgasrückführrate wird in dem elektronischen Steuergerät 15 mittels eines Rechners 25 berechnet und einem Regler 26 zugeführt, der die derart bestimmte Abgasrückführrate (Ist-Wert) mit einem für den entsprechenden vorliegenden Arbeitspunkt geltenden Soll-Wert, der einem Speicher 27 entnehmbar ist, vergleicht und bei einer Abweichung diese möglichst klein oder zu Null macht.

Für den erfindungsgemäßen Abgleich (Annäherung der Soll-Kennlinie an die erfaßte Kennlinie) kann die Soll-Kennlinie (Soll-Kennfeld) ebenfalls in dem Speicher 27 oder gegebenenfalls in einem weiteren Speicher des elektronischen Steuergerätes 15 abgelegt sein.

Ebenfalls umfaßt das in Figur 1 dargestellte elektronische Steuergerät 15 alle Mittel, die für den Abgleich gemäß der Patentansprüche 4 bis 8 erforderlich sind.

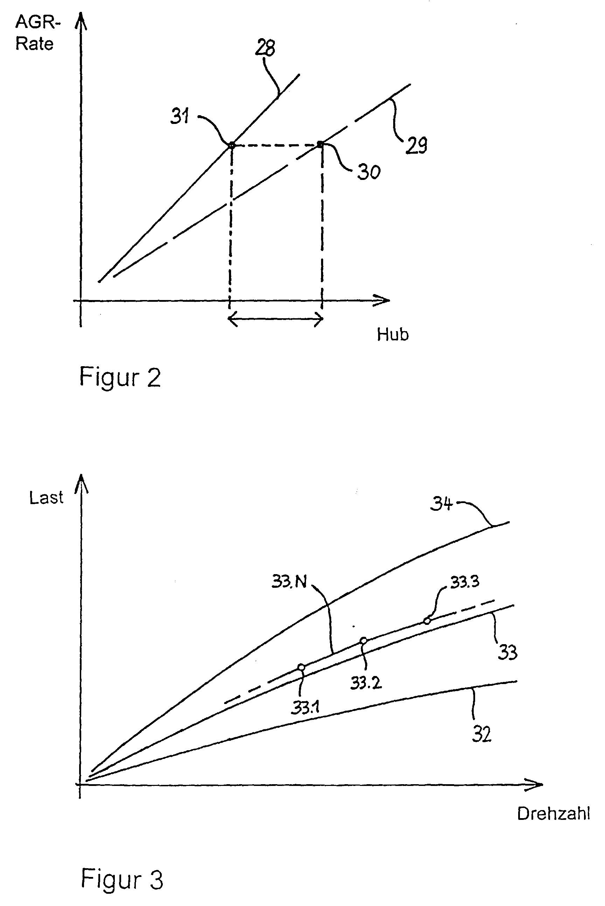

Figur 2 zeigt eine Soll-Abgasrückführrate 28 und eine Ist-Abgasrückführrate 29. Die sich, abweichend von der Soll-Abgasrückführrate 28, einstellende Ist-Abgasrückführrate 29 beruht beispielsweise auf einer Toleranz, eines Verschleißes oder einer Verschmutzung des Abgasrückführventiles 17. Auf der X-Achse ist der Hub des Abgasrückführventiles 17, auf der Y-Achse die Abgasrückführrate (AGR-Rate) dargestellt. Da der auf der X-Achse dargestellte Hub des Abgasrückführventiles 17 für die Ist-Abgasrückführrate 29 in dem Punkt 30 von der Soll-Einstellung abweicht, ist es erforderlich, den Hub des Abgasrückführventiles 17 so zu verändern, daß die Abgasrückführrate von Punkt 31, der auf der Soll-Abgasrückführrate 28 liegt, erreicht wird. Dies geschieht durch entsprechende Ansteuerung des Abgasrückführventiles 17 um den Hubbetrag zwischen den beiden Punkten 30 und 31, denen ein bestimmter Hub des Abgasrückführventiles 17 entspricht. Je nach Lage der beiden Abgasrückführraten 28 und 29 kann eine weitere Öffnung oder ein weiteres Schließen des Abgasrückführventiles 17 erforderlich sein.

Figur 3 zeigt beispielhaft verschiedene Soll-Kennlinien des Luftmassensensors 23. Auf der X-Achse ist die Drehzahl aufgetragen, während auf der Y-Achse die Last der Brennkraftmaschine (beispielsweise repräsentiert durch die Ansaugluftmasse oder die Einspritzmenge) dargestellt ist. Die verschiedenen Soll-Kennlinien, bezeichnet mit den Bezugsziffern 32 bis 34, sind in dem Speicher 27 des elektronischen Steuergerätes 15 abgelegt und wurden beispielsweise exemplarisch bei Prüfstandsläufen eines bestimmten Brennkraftmaschinentyps ermittelt. Aufgrund von Toleranzen der neuen Bauteile der Abgasrückführeinrichtung und beim weiteren Betrieb der Brennkraftmaschine aufgrund von Verschleiß und Verschmutzungen liegen die gemessenen Ist-Werte des Luftmassensensors 23 nicht mehr auf der Soll-Kennlinie 33, sondern daneben und sind mit 33.1 bis 33.3 beispielhaft bezeichnet. Aufgrund der gemessenen Ist-Werte 33.1 bis 33.3, die die Toleranzen, den Verschleiß und/oder die Verschmutzung beinhalten, kann mit dem erfindungsgemäßen Abgleich eine neue Soll-Kennlinie 33.N erzeugt werden, so daß die Kennlinie (Kennfeld) für den Soll-Luftmassenstrom auf den Wert des gemessenen Ist-Wertes bei geschlossenem Abgasrückführventil korrigiert wird. Dies erfolgt entweder adaptiv im momentan gemessenen Kennfeldpunkt oder unter Anwendung von geeigneten Algorithmen (zum Beispiel Interpolation, wie dies in Figur 3 für einen Teilbereich der neuen Kennlinie 33.N gezeigt ist) für die gesamte Kennlinie beziehungsweise für das gesamte Kennfeld.

Während in Figur 3 beispielhaft verschiedene Soll-Kennlinien für den Luftmassensensor 23 gezeigt sind, gilt gleiches für die Kennlinien beziehungsweise Kennfelder des Sensors 24 und gegebenenfalls einer Kombination dieser beiden Sensoren 23 und 24, wobei deren Kennlinien entweder in ein und demselben Speicher des elektronischen Steuergerätes 15 oder auch in verschiedenen Speichern abgelegt sind.

Mit dem erfindungsgemäßen Verfahren ist also zum einen sichergestellt, daß die gemessene Ist-Abgasrückführrate an die (optimale) Soll-Abgasrückführrate angepaßt wird und darüber hinaus ein lernfähiges System vorliegt, das sich an vorliegende Toleranzen und während der Lebensdauer der Brennkraftmaschine an sich verändernde Bedingungen (insbesondere verursacht durch Verschmutzung und Verschleiß) selbsttätig anpaßt und daher lernfähig ist.

## Patentansprüche

1. Verfahren zum Betreiben einer Abgasrückführeinrichtung einer Brennkraftmaschine, bei der Abgas von einer Auslaßleitung der Brennkraftmaschine über ein Abgasrückführventil zu einer Einlaßleitung der Brennkraftmaschine gelangt, wobei das Abgasrückführventil in Abhängigkeit von erfaßten Betriebsparametern der Brennkraftmaschine angesteuert wird,
dadurch gekennzeichnet, daß ein in Abhängigkeit der erfaßten Betriebsparameter (Arbeitspunkt) der Brennkraftmaschine ermittelter Ist-Wert für die Abgasrückführrate bei Abweichung von einem für diesen Arbeitspunkt geltenden Soll-Wert auf den Soll-Wert eingeregelt wird.

2. Verfahren nach Anspruch 1,
dadurch gekennzeichnet, daß bei der Ermittlung des Ist-Wertes für die Abgasrückführrate die gemessene Ansaugluftmasse in der Einlaßleitung berücksichtigt wird.

3. Verfahren nach Anspruch 1 oder 2,
dadurch gekennzeichnet, daß bei der Ermittlung des Ist-Wertes für die Abgasrückführrate das im Abgas in der Auslaßleitung gemessene Verbrennungsluftverhältnis berücksichtigt wird.

4. Verfahren nach einem der vorhergehenden Ansprüche,
dadurch gekennzeichnet, daß zumindest eine Kennlinie wenigstens eines die Abgasrückführrate beeinflussenden Betriebsparameters über einen vorgebbaren Bereich erfaßt und mit einer Soll-Kennlinie verglichen wird, wobei zumindest eine Annäherung (Abgleich) der Soll-Kennlinie an die erfaßte Kennlinie durchgeführt wird.

5. Verfahren nach Anspruch 4,
dadurch gekennzeichnet, daß der Abgleich bei geschlossenem Abgasrückführventil durchgeführt wird.

6. Verfahren nach Anspruch 4 oder 5,
dadurch gekennzeichnet, daß der Abgleich für einzelne Kennlinienpunkte und/oder zumindest für Teilbereiche der Kennlinie, insbesondere der gesamten Kennlinie, durchgeführt wird.

7. Verfahren nach einem der Ansprüche 4 bis 6,
dadurch gekennzeichnet, daß zur Durchführung des Abgleiches das Abgasrückführventil geschlossen und der Abgleich durchgeführt wird, wenn folgende Bedingungen gegeben sind und gegebenenfalls während des Abgleiches erhalten bleiben:
- stationärer Betrieb der Brennkraftmaschine (insbesondere keine Einspritzmengen- und Drehzahländerung in einem definierten Zeitfenster),
- betriebswarme Brennkraftmaschine.

8. Verfahren nach einem der Ansprüche 4 bis 7,
dadurch gekennzeichnet, daß der Abgleich einmalig oder mehrmals durchgeführt wird.

9. Anwendung des Verfahrens nach einem der vorhergehenden Ansprüche bei einer Dieselbrennkraftmaschine.

10. Abgasrückführeinrichtung einer Brennkraftmaschine, bei der Abgas von einer Auslaßleitung der Brennkraftmaschine über ein Abgasrückführventil zu einer Einlaßleitung der Brennkraftmaschine zuführbar ist, wobei das Abgasrückführventil in Abhängigkeit von erfaßten Betriebsparametern der Brennkraftmaschine ansteuerbar ist,
dadurch gekennzeichnet, daß die Abgasrückführeinrichtung entsprechend jedem der einzelnen vorangegangenen Verfahrensschritte ausgebildet ist.
